# EUROPÄISCHE PATENTSCHRIFT

(11) **EP 1 404 561 B1**
(45) Veröffentlichungstag und Bekanntmachung des Hinweises auf die Patenterteilung: **24.11.2004**
(21) Anmeldenummer: 02738115.1
(22) Anmeldetag: 28.05.2002
(51) Int. Cl.: B60T 17/22

(54) **VERFAHREN UND ANORDNUNG ZUR DICHTHEITSPROBE DER HAUPTLUFTLEITUNG AN SELBSTTÄTIGEN DRUCKLUFTBREMSEN VON EISENBAHNFAHRZEUGEN**
METHOD AND ARRANGEMENT FOR TESTING THE TIGHTNESS OF THE MAIN AIRSTREAM LINE ON AUTOMATIC PNEUMATICALLY OPERATED BRAKES IN RAIL VEHICLES
PROCEDE ET DISPOSITION POUR TESTER L'ETANCHEITE DE LA CONDUITE D'AIR PRINCIPALE SUR DES FREINS PNEUMATIQUES AUTOMATIQUES DE VEHICULES FERROVIAIRES

(30) Priorität: 12.07.2001 DE 10133910
(43) Veröffentlichungstag der Anmeldung: 07.04.2004
(73) Patentinhaber: Deutsche Bahn AG, 10785 Berlin (DE)
(72) Erfinder: BECKER, Dietmar, 38889 Blankenburg (DE)
(74) Vertreter: Zinken-Sommer, Rainer
(86) Internationale Anmeldenummer: PCT/EP2002/005840
(87) Internationale Veröffentlichungsnummer: WO 2003/006297

(56) Entgegenhaltungen:
- US-A- 3 304 420
- US-A- 5 714 684
- US-A- 5 808 909

## Beschreibung

Die Erfindung betrifft ein Verfahren und eine Anordnung zur Dichtheitsprobe der Hauptluftleitung an selbsttätigen Druckluftbremsen von Eisenbahnfahrzeugen. Sie dient dazu, unabhängig von störenden Einflüssen die Dichtheitsprobe nach Kriterien durchzuführen, die ein eindeutiges Prüfergebnis zulassen.

Um Bremsproben an Eisenbahnfahrzeugen nach der Zugbildung zu rationalisieren, werden stationäre Bremsprobegeräte eingesetzt. Da hierbei eine Zufuhr von Druckluft über gesonderte externe Einrichtungen erfolgt, kann auf eine Druckluftversorgung durch ein an die Hauptluftleitung angeschlossenes Triebfahrzeug verzichtet werden.

Neben dem eigentlichen Füllen der Hauptluftleitung auf einen vorgeschriebenen Druck, einem Einbremsen und einem anschließenden Lösen der Bremsen gehört die Durchführung einer Dichtheitsprobe zu den wesentlichen wie auch vorgeschriebenen Maßnahmen bei der Durchführung von Bremsproben.

Bei der Dichtheitsprobe wird über ein zumeist am Bremsprobegerät befindliches Ventil die Verbindung des Füllanschlusses zur Hauptluftleitung des Zuges unterbrochen. In dem nun abgeschlossenen Volumen, im Wesentlichen bestehend aus dem Leitungsvolumen der Zuleitung und der Hauptluftleitung, wird ein gegebenenfalls eintretender Druckabfall über eine vorgeschriebene Zeitspanne hinweg durch das Bremsprobegerät messtechnisch erfasst. Zur anschließenden Beurteilung eines dichten oder undichten Bremssystems wird ein maximal zulässiger Wert für den eingetretenen Druckabfall herangezogen, der in entsprechenden Vorschriften formuliert ist.

Naturgemäß ist die Quantifizierung eines eventuellen Leckstromes auf dem Wege der Bestimmung des Druckabfalls nur dann möglich, wenn dieser auf einen bestimmten konstanten Ausgangsdruck sowie auf ein bestimmtes konstantes Volumen bezogen wird.

Ein konstanter Ausgangsdruck ist in der Praxis gewährleistet, da die Hauptluftleitung vor Ausführung der Dichtheitsprobe bereits auf einen genau festgelegten Druck aufzufüllen ist. Von einem konstanten Volumen dagegen kann in aller Regel nicht ausgegangen werden. Dieses variiert allein schon wegen der unterschiedlichen Längen der zusammenzustellenden Züge. In den schon erwähnten Vorschriften für den Ablauf der Dichtheitsprobe werden jedoch keine Angaben hinsichtlich der Zuglänge getroffen, für die der maximal zulässige Druckabfall gilt. Weiterhin wird die Größe des Volumen beeinflusst durch die Länge der Luftleitung zwischen dem Bremsprobegerät und dem Anschluss an den zu prüfenden Zug.

Inwieweit die Größe des eingeschlossenen Volumens ein Prüfergebnis ausschlaggebend beeinflusst, ist bereits daraus erkennbar, dass die Dichtheit eines Zugverbandes praktisch herbeigeführt werden kann, indem diesem einzelne Wagen mit hinreichend dichten Bremskupplungen an den Hauptluftleitungen hinzugefügt werden.

Um die daraus entstehenden Fehler möglichst gering zu hatten, müssen in der Praxis einige begleitende Maßnahmen bei der Durchführung der Dichtheitsprobe beachtet und eingehalten werden. Dies betrifft insbesondere eine Einschränkung der Leitungslänge zwischen dem Bremsprobegerät und dem Anschluss an die Hauptluftleitung des Zuges. Zweckmäßig ist außerdem, das absperrende Ventil samt Drucksensor von dem eigentlichen Bremsprobegerät weg und hin an den zu prüfenden Zug zu verlegen. Diese Maßnahmen schränken allerdings den Komfort ein, den Bremsprobegeräte und insbesondere automatisch arbeitende Anlagen normalerweise bieten. Eine eindeutige Bewertung des Prüfergebnisses lassen sie indessen nicht zu.

Aus US 5 808 909 ist eine Vorrichtung zur automatischen Bremsprobe von Schienenfahrzeugen bekannt, bei der eine Steuerungseinheit 4 Ventile in einem Verteilerblock unabhängig voneinander öffnet oder schließt. Die 4 Ventile wiederum steuern die Zuführung von Druckluft zu 4 Druckluftleitungen, die mit der Hauptluftleitung des Schienenfahrzeugs verbunden sind. Nachteil der Vorrichtung ist jedoch, dass nicht angegeben wird, wie die Vorrichtung für eine Dichtheitsprobe der Hauptluftleitung verwendet werden kann.

Der Erfindung liegt die Aufgabe zugrunde, ein Verfahren und eine Anordnung zur Dichtheitsprobe der Hauptluftleitung an selbsttätigen Druckluftbremsen zu schaffen, die es erlauben, eine Dichtheitsprobe unabhängig von störenden Einflüssen nach Kriterien durchzuführen, die ein eindeutiges Prüfergebnis zulassen.

Diese Aufgabe wird in Verbindung mit dem Oberbegriff des Hauptanspruches erfindungsgemäß gelöst, indem parallel zu einem Magnetventil mit größerem Querschnitt für das Füllen der Hauptluftleitung in Strömungsrichtung ein Bypass mit einem zweiten Magnetventil kleineren Querschnittes zusammen mit einem Volumenstromsensor angeordnet ist, dass das Füllen der Hauptluftleitung durch Öffnen des Magnetventils mit größerem Querschnitt erfolgt, während das Magnetventil kleineren Querschnittes geschlossen bleibt, und dass für die Dichtheitsprobe das Magnetventil größeren Querschnittes geschlossen und dabei das zweite Magnetventil kleineren Querschnittes geöffnet wird, über das ein Volumenstrom nachgefüllt wird, der für die Druckerhaltung in der Hauptluftleitung mindestens erforderlich ist, und dass der nachfüllende Volumenstrom gemessen wird und ein Kriterium für die Dichtheit der Hauptluftleitung ist.

Eine vorteilhafte Ausgestaltung der Erfindung ist im Patentanspruch 4 angegeben. Danach besteht der Volumenstromsensor aus einem Laminarrohr, an dem eine Druckdifferenz zwischen seinem Eingang und seinem Ausgang gemessen wird und sich diese Druckdifferenz proportional zu dem zu messenden Volumenstrom verhält und somit ein Maß für diesen ist.

Der Volumenstrom zum Nachfüllen der abgesperrten Hauptluftleitung über das zweite Magnetventil kleineren Querschnittes kann wegen eines vorgeschalteten Druckreglers für den Füllvorgang nur maximal so groß werden wie derjenige Volumenstrom, der durch Leckfluss verloren geht. Bleibt während dieses Nachfüllens der Druck innerhalb der Hauptluftleitung mindestens oberhalb eines vorgegebenen Wertes für einen Toleranzbereich, so ist der für das Nachfüllen erforderliche Volumenstrom gleich groß dem abfließenden Leckstrom und somit ein Maß für die Dichtheit. Die Hauptluftleitung kann folglich dann als dicht beurteilt werden, wenn dieser Volumenstrom einen vorgegebenen Vergleichswert für einen maximalen Leckstrom nicht überschreltet.

Das Erkennen eines Druckabfalls während des Nachfüllens in der Hauptluftleitung auf Werte unterhalb dieses Toleranzbereiches weist dagegen auf eine Erschöpfung des zum Nachfüllen maximal verfügbaren Volumenstromes hin. Wenn dieser maximal verfügbare Volumenstrom in einer besonderen Ausführungsform der Erfindung so dimensioniert ist, dass er dem maximal zulässigen Leckstrom entspricht, so ist auch das Erfassen eines Druckabfalls unabhängig von seiner Größe gleichzusetzen mit dem Erkennen einer undichten Hauptluftleitung und erübrigt zudem in Übereinstimmung mit dem Anspruch 2 die gesonderte Erfassung des nachgefüllten Volumenstromes.

Ein Ausführungsbeispiel der Erfindung ist in der Zeichnung dargestellt und wird im folgenden näher beschrieben.

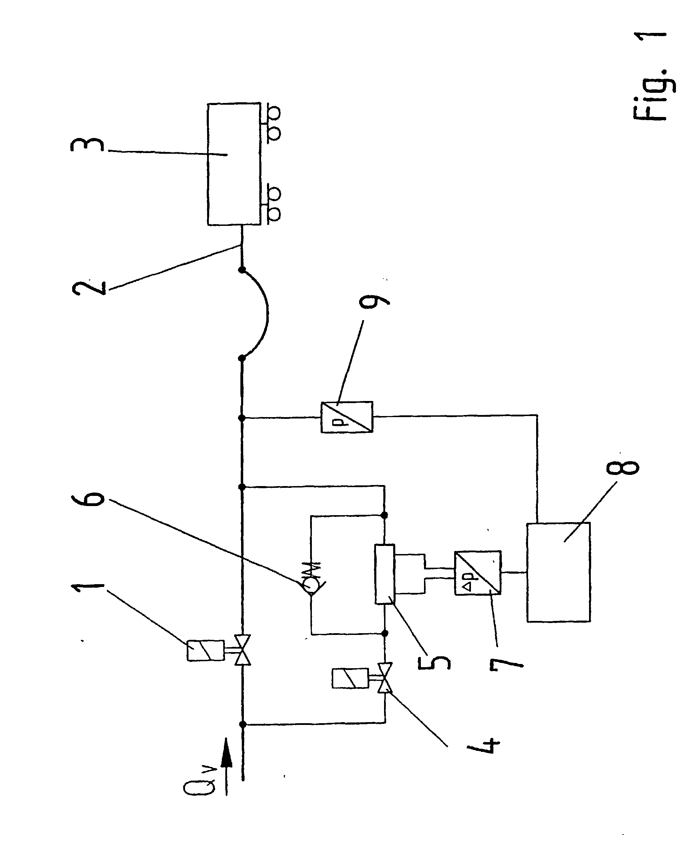

Es zeigt Figur 1 einen schematischen Aufbau einer erfindungsgemäßen Anordnung zur Durchführung der Dichtheitsprobe.

Einem Magnetventil größeren Querschnittes 1 ist als Bypass in Strömungsrichtung zur Hauptluftleitung 2 eines Zuges 3 ein Magnetventil kleineren Querschnittes 4 und ein Volumenstromsensor in der Form eines Laminarrohres 5 parallel geschaltet. Dem Laminarrohr 5 ist weiterhin ein Rückschlagventil 6 mit Durchströmrichtung in Richtung zur Hauptluftleitung 2 des Zuges 3 parallel geschaltet. Das Rückschlagventil 6 weist einen definierten Öffnungsdruck auf. Der Querschnitt und der Messbereich des Laminarrohres 5 sind so abgestimmt, dass sie den für die Messaufgabe relevanten Volumenströmen entsprechen.

Ein Differenzdrucksensor 7 ist so mit dem Laminarrohr 5 verbunden, dass er die Druckwerte am Eingang und am Ausgang des Laminarrohres 5 aufnehmen und in ein elektrisches Signal wandeln kann, das einer Steuereinrichtung 8 zugeführt wird.

An der Hauptluftleitung 2 ist ein Drucksensor 9 angeschlossen, der an seinem Ausgang ein dem Druck proportionales elektrisches Signal erzeugt, das ebenfalls mit der Steuereinrichtung 8 verbunden ist.

Für das Auffüllen der Hauptluftleitung 2 wird ein Volumenstrom Qᵥ über einen Druckregler am Bremsprobegerät und über das geöffnete Magnetventil größeren Querschnittes 1 in die Hauptluftleitung 2 geführt. Es wird so ein schnelles Aufladen mit einem hinreichend großen Volumenstrom auf einen Druck ermöglicht, der dem eingestellten Wert des Druckreglers entspricht. Das Magnetventil kleineren Querschnittes 4 bleibt dabei noch geschlossen.

Zur Durchführung der Dichtheitsprobe wird das Magnetventil größeren Querschnittes 1 geschlossen und dann das Magnetventil kleineren Querschnittes 4 geöffnet. Jetzt ist das Bremssystem, bestehend aus Hauptluftleitung 2 und Zuleitung zur Hauptluftleitung 2, vom Volumenstrom Qᵥ weitgehend abgetrennt und wird nur noch über das Magnetventil kleineren Querschnittes 4 und das Laminarrohr 5 weiter nachgefüllt. Während des Nachfüllens überwacht der Drucksensor 9 den Druck in der Hauptluftleitung-2. Ein auftretender Druckabfall in der Hauptluftleitung 2 unter die Grenze eines Toleranzbereiches kennzeichnet die Erschöpfung des nachfüllenden Volumenstromes und weist auf einen erheblichen Leckstrom in der Hauptluftleitung hin.

Liegt die über den Drucksensor 9 ermittelte Druckeinhaltung korrekt innerhalb des Toleranzbereiches, so kann über den Druckdifferenzsensor 7 die Druckdifferenz an dem Laminarrohr 5 zwischen seinem Eingang und seinem Ausgang gemessen werden. Diese Druckdifferenz verhält sich direkt proportional zu dem durch das Laminarrohr 5 strömenden Volumenstrom und ist somit ein Maß für diesen. Dabei dient das Rückschlagventil 6 als Schutz für den Differenzdrucksensor 7. Der Messwert über die Höhe des Volumenstromes durch das Laminarrohr 5 wird an die Steuereinheit 8 geleitet und dort mit einem maximal zulässigen Wert für den Leckstrom verglichen. Im Ergebnis dieses Vergleiches werden Signale zur Kennzeichnung einer dichten oder undichten Hauptluftleitung 2 ausgegeben und angezeigt.

Nach beendeter Dichtheitsprobe wird das Magnetventil kleineren Querschnittes 4 geschlossen und das Magnetventil größeren Querschnittes erneut geöffnet.

### Bezugszeichen

1 Magnetventil größeren Querschnittes
2 Hauptluftleitung
3 Zug
4 Magnetventil kleineren Querschnittes
5 Laminarrohr
6 Rückschlagventil
7 Druckdifferenzsensor
8 Steuereinrichtung
9 Drucksensor

## Patentansprüche

1. Verfahren zur Dichtheitsprobe der Hauptluftleitung an selbsttätigen Druckluftbremsen von Eisenbahnfahrzeugen mit Verwendung von Bremsprobegeräten, **dadurch gekennzeichnet, dass** das Füllen der Hauptluftleitung (2) durch Öffnen eines Magnetventils mit einem größeren Querschnitt (1) erfolgt, währenddessen ein parallel geschaltetes Magnetventil kleineren Querschnittes (4) geschlossen bleibt, dass für die Durchführung der Dichtheitsprobe das Magnetventil größeren Querschnittes (1) geschlossen und das Magnetventil kleineren Querschnittes (4) geöffnet wird, und über das Magnetventil kleineren Querschnittes (4) ein Volumenstrom nachgefüllt wird, der für die Druckerhaltung in der Hauptluftleitung (2) mindestens erforderlich ist, dass der für die Nachfüllung erforderliche Volumenstrom mit einem Volumenstromsensor gemessen wird, so dass der ermittelte Wert im Vergleich mit einem vorgegebenen Wert für einen maximal zulässigen Leckstrom als Kriterium für die Dichtheit der Hauptluftleitung (2) verwendet wird.

2. Verfahren nach Anspruch 1, **dadurch gekennzeichnet, dass** der zum Nachfüllen der Hauptluftleitung (2) maximal verfügbare Volumenstrom so dimensioniert wird, dass er dem maximal zulässigen Leckstrom entspricht, und dass somit das Erfassen eines Druckabfalls über einen Drucksensor (9) während des Nachfüllens in der Hauptluftleitung (2) gleichbedeutend ist mit dem Erkennen einer als undicht zu bewertenden Hauptluftleitung (2).

3. Anordnung zur Dichtheitsprobe der Hauptluftleitung an selbsttätigen Druckluftbremsen von Eisenbahnfahrzeugen mit Verwendung von Bremsprobegeräten, **dadurch gekennzeichnet, dass** parallel zu einem Magnetventil mit größerem Querschnitt (1) für das Füllen der Hauptluftleitung (2) in Strömungsrichtung ein Bypass mit einem zweiten Magnetventil kleineren Querschnittes (4) zusammen mit einem Volumenstromsensor angeordnet ist.

4. Anordnung nach Anspruch 3, **dadurch gekennzeichnet, dass** der Volumenstromsensor aus einem Laminarrohr (5) besteht, an dessen Eingang und Ausgang ein Differenzdrucksensor (7) angeordnet ist oder Drucksensoren angeordnet sind, mit denen eine Druckdifferenz messbar ist, die sich proportional zu dem zu messenden Volumenstrom verhält und ein Maß für diesen ist.

5. Anordnung nach den Ansprüchen 3 und 4, **dadurch gekennzeichnet, dass** dem Volumenstromsensor ein Rückschlagventil (6) parallel geschaltet ist, dessen Durchströmrichtung derjenigen des Volumenstromsensors während der Volumenstrommessung entspricht.

6. Anordnung nach den Ansprüchen 3 bis 5, **dadurch gekennzeichnet, dass** der Volumenstromsensor ausgangsseitig mit einer Steuereinrichtung (8) zur Auswertung verbunden ist.

7. Anordnung nach den Ansprüchen 3 bis 6, **dadurch gekennzeichnet, dass** an der Hauptluftleitung (2) ein Drucksensor (9) zur Messung des Druckes oder zum Nachweis der Druckerhaltung in der Hauptluftleitung (2) angeordnet ist, und dass der Drucksensor (9) ausgangsseitig mit einer Steuereinrichtung (8) zur Auswertung verbunden ist.

## Claims

1. A method for carrying out a leak test of the main air pipe on automatic air brakes of railway vehicles by utilizing brake testing devices, **characterized in that** the main air pipe (2) is filled by opening a solenoid valve that has a larger cross section (1) while a solenoid valve that has a smaller cross section (4) and is arranged parallel thereto remains closed, **in that** the solenoid valve with the larger cross section (1) is closed and the solenoid valve with the smaller cross section (4) is opened when the leak test is carried out and a minimum volume flow required for maintaining the pressure in the main air pipe (2) is added via the solenoid valve with the smaller cross section (4), and **in that** the volume flow required for the addition is measured with a volume flow sensor such that the determined value in comparison with a predetermined value for a maximum permissible leakage flow can be utilized as a criterion for the tightness of the main air pipe (2).

2. The method according to Claim 1, **characterized in that** the maximum volume flow available for being added to the main air pipe (2) is dimensioned such that it corresponds to the maximum permissible leakage flow and a pressure drop measured by a pressure sensor (9) during the addition into the main air pipe (2) consequently is equivalent to the detection of a leaky main air pipe (2).

3. An arrangement for carrying out a leak test of the main air pipe on automatic air brakes of railway vehicles by utilizing brake testing devices, **characterized in that** a bypass with a second solenoid valve that has a smaller cross section (4) and a volume flow sensor is arranged parallel to a solenoid valve that has a larger cross section (1) and serves for filling the main air pipe (2) in the flow direction.

4. The arrangement according to Claim 3,
**characterized in that** the volume flow sensor consists of a laminar tube (5), wherein a differential pressure sensor (7) or pressure sensors for measuring a differential pressure that is proportional to and a quantity for the volume flow to be measured is/are arranged on the inlet and the outlet of said laminar tube.

5. The arrangement according to Claims 3 and 4, **characterized in that** a check valve (6) is arranged parallel to the volume flow sensor, wherein the direction of flow through said check valve corresponds to that through the volume flow sensor during the volume flow measurement.

6. The arrangement according to Claims 3-5, **characterized in that** the output side of the volume flow sensor is connected to a control device (8) for evaluation purposes.

7. The arrangement according to Claims 3-6, **characterized in that** the main air pipe (2) is provided with a pressure sensor (9) for measuring the pressure or for verifying that the pressure in the main air pipe (2) is maintained, and **in that** the output side of the pressure sensor (9) is connected to a control device (8) for evaluation purposes.

## Revendications

1. Procédé d'essai d'étanchéité de la canalisation d'air principale sur des freins à
air comprimé autonomes de véhicules ferroviaires en utilisant des appareils d'essai de freins, **caractérisé en ce que** le remplissage de la canalisation d'air principale (2) est réalisé en ouvrant une soupape magnétique de plus grande section transversale (1), tandis qu'une soupape magnétique de plus petite section transversale (4) branchée en parallèle reste fermée, que, pour réaliser l'essai d'étanchéité, on ferme la soupape magnétique de plus grande section transversale (1) et on ouvre la soupape magnétique de plus petite section transversale (4) et qu'on rajoute par le biais de la soupape magnétique de plus petite section transversale (4) un flux volumique qui est au minimum nécessaire pour le maintien de la pression dans la canalisation d'air principale (2), que le flux volumique nécessaire pour compléter le remplissage est mesuré à l'aide d'un capteur de flux volumique, de sorte que la valeur déterminée comparée à une valeur prédéfinie pour un courant de fuite maximal admissible est utilisée comme critère pour l'étanchéité de la canalisation d'air principale (2).

2. Procédé selon la revendication 1, **caractérisé en ce que** le flux volumique
disponible au maximum pour compléter le remplissage de la canalisation d'air principale (2) est fixé de manière à correspondre au courant de fuite maximal admissible et qu'ainsi l'enregistrement d'une chute de pression par un capteur de pression (9) pendant qu'on complète le remplissage dans la canalisation d'air principale (2) signifie la détection d'une canalisation d'air principale (2) à considérer comme non étanche.

3. Dispositif d'essai d'étanchéité de la canalisation d'air principale sur des freins à
air comprimé autonomes de véhicules ferroviaires en utilisant des appareils d'essai de freins, **caractérisé en ce que**, parallèlement à une soupape magnétique de plus grande section transversale (1), pour le remplissage de la canalisation d'air principale (2), dans le sens d'écoulement, est disposée une dérivation comportant une deuxième soupape magnétique de plus petite section transversale (4) accompagnée d'un capteur de flux volumique.

4. Dispositif selon la revendication 3, **caractérisé en ce que** le capteur de flux
volumique est composé d'un tube laminaire (5), à l'entrée et à la sortie duquel est disposé un capteur de pression différentielle (7) ou sont disposés des capteurs de pression qui permettent de mesurer une différence de pression qui se comporte proportionnellement au flux volumique à mesurer et est un indicateur de celui-ci.

5. Dispositif selon la revendication 3 et 4, **caractérisé en ce qu'**en parallèle au
capteur de flux volumique est branchée une soupape anti-retour (6) dont le sens d'écoulement correspond à celui du capteur de flux volumique pendant la mesure du flux volumique.

6. Dispositif selon les revendications 3 à 5, **caractérisé en ce que** le capteur de
flux volumique est relié côté sortie à un dispositif de commande (8) pour l'exploitation.

7. Dispositif selon les revendications 3 à 6, **caractérisé en ce que**, sur la
canalisation d'air principale (2), est disposé un capteur de pression (9) servant à mesurer la pression ou à prouver le maintien de pression dans la canalisation d'air principale (2) et que le capteur de pression (9) est relié côté sortie à un dispositif de commande (8) pour l'exploitation.
